(19)

Europäisches Patentamt

European Patent Office

Office européen des brevets

(11) **EP 4 773 631 A1**

(12) **EUROPEAN PATENT APPLICATION**
published in accordance with Art. 153(4) EPC

(43) Date of publication:
08.07.2026  Bulletin 2026/28

(51) International Patent Classification (IPC):
*H04R 27/00* (2006.01)    *G10K 15/00* (2006.01)
*H04R 1/02* (2006.01)    *H04R 3/00* (2006.01)

(21) Application number: 24859814.6

(22) Date of filing: 28.08.2024

(52) Cooperative Patent Classification (CPC):
G10K 15/00; H04R 1/02; H04R 3/00; H04R 27/00

(86) International application number:
PCT/JP2024/030652

(87) International publication number:
WO 2025/047783 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.08.2023  JP 2023137780
14.02.2024  JP 2024019952
14.06.2024  JP 2024096494

(71) Applicant: YAMAHA CORPORATION
Hamamatsu-shi, Shizuoka 430-8650 (JP)

(72) Inventors:
• ANDO Kohei
Hamamatsu-shi, Shizuoka 430-8650 (JP)
• KANAMORI Kohei
Hamamatsu-shi, Shizuoka 430-8650 (JP)
• YAMAKAWA Takashi
Hamamatsu-shi, Shizuoka 430-8650 (JP)
• AIBA Hirotaka
Hamamatsu-shi, Shizuoka 430-8650 (JP)
• SUZUKI Masashi
Hamamatsu-shi, Shizuoka 430-8650 (JP)

(74) Representative: Kehl, Ascherl, Liebhoff & Ettmayr
Patentanwälte Partnerschaft mbB
Emil-Riedel-Straße 18
80538 München (DE)

(54) **LISTENING SOUND ACQUISITION METHOD AND LISTENING SOUND ACQUISITION DEVICE**

(57)    A listening sound obtaining method, in a loudspeaker system that sends an utterance sound of an utterer to a listener through a loudspeaker transmission channel including a sound collection means, an amplification means, and a sound emission means, obtains a sound pressure at any position on a transmission channel of the utterance sound and calculates a sound pressure at a listening position of the listener based on obtained sound pressure.

FIG.1

## Description

Technical Field

One embodiment of the present invention relates to a listening sound obtaining method and a listening sound obtaining apparatus.

Background Art

In a conference system, a means to amplify an utterance sound and transmit to a conference participant is provided in a conference room so that all conference participants can clearly listen to the utterance sound. In this kind of the conference system, it is necessary to amplify the utterance sound so that the utterance sound of an utterer reaches may reach a listener at a sufficient sound pressure. Patent Literature 1 discloses a technique that, although concerning a remote control, notifies an execution state of amplification in an area in which an utterance sound is amplified.

Citation List

Patent Literature

Patent Literature 1: Japanese Unexamined Patent Application Publication No. 2001-245365

Summary of the Invention

Technical Problem

However, the technique of Patent Literature 1 only notifies an execution state of amplification, and even when this notification is received, it is difficult to determine whether or not an utterance sound reaches a listener at the sufficient sound pressure.

One embodiment of the present invention is made in view of the above circumstances and is directed to provide a listening sound obtaining method that obtains a sound pressure of an utterance sound.

Solution to Problem

In a listening sound obtaining method according to one embodiment of the present invention, the listening sound obtaining method, in a loudspeaker system that sends an utterance sound of an utterer to a listener through a loudspeaker transmission channel including a sound collection means, an amplification means, and a sound emission means, obtains a sound pressure at any position on a transmission channel of the utterance sound and calculates a sound pressure at a listening position of the listener based on obtained sound pressure.

Brief Description of Drawings

[FIG. 1] is a block diagram showing a configuration of a listening sound obtaining apparatus and a conference system that execute a listening sound obtaining method being one embodiment of the present invention.
[FIG. 2] is a block diagram showing a hardware configuration of the listening sound obtaining apparatus 200.
[FIG. 3] is a view showing a configuration example of a transmission system of an utterance sound in the same embodiment.
[FIG. 4] is a block diagram of the same transmission system.
[FIG. 5] is a block diagram showing a listening sound obtaining method in the same transmission system.
[FIG. 6] is a block diagram showing a generalized transmission system of the utterance sound in the same embodiment.
[FIG. 7] is a block diagram showing a transmission channel that configures the same transmission system.
[FIG. 8] is a block diagram showing the listening sound obtaining method in the same transmission system.
[FIG. 9] is a view showing an example of an information provider in the same embodiment.
[FIG. 10] is a flowchart of listening sound obtaining processing to be executed in the same embodiment.
[FIG. 11] is a block diagram showing a listening sound obtaining method being another embodiment of the present invention.
[FIG. 12] is a diagram showing a modification of visible information.
[FIG. 13] is a diagram showing a modification of visible information.
[FIG. 14] is a side surface schematic diagram of a conference room.
[FIG. 15] is a diagram showing a further modification of visible information.
[FIG. 16] is a diagram showing a further modification of visible information.
[FIG. 17] is a diagram showing a further modification of visible information.

Description of Embodiments

Hereinafter, an embodiment of the present invention will be described with reference to drawings.

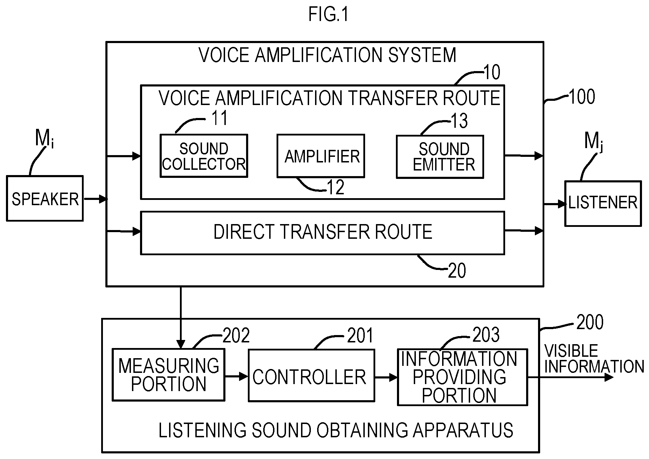

FIG. 1 is a block diagram showing a configuration of a listening sound obtaining apparatus 200 and a loudspeaker system 100 that execute a listening sound obtaining method being one embodiment of the present invention. Obtaining a listening sound in the present embodiment means obtaining information on a sound pressure (spm) of a listening sound.

The listening sound obtaining method according to the present embodiment is targeted at the loudspeaker system 100 shown in FIG. 1. The loudspeaker system 100 of the present embodiment, that is, the loudspeaker system 100 being a system in which a voice of a certain utterer is amplified and sent to a listener is used for, for example, a conference, a seminar, a presentation, or the like. The present embodiment shows an example that uses the loudspeaker system 100 for a conference as an example. In the loudspeaker system 100, an utterance sound of a conference participant Mi being an utterer reaches a conference participant Mj being a listener through a loudspeaker transmission channel 10 including a sound collection means 11, an amplification means 12, and a sound emission means 13, and the utterance sound reaches the conference participant Mj through a direct transmission channel 20 that does not include the loudspeaker transmission channel 10.

The listening sound obtaining apparatus 200 is an apparatus that obtains a sound pressure of a conference participant $M_j$ being a listener at a listening position by arithmetic operation, in such a loudspeaker system 100. The listening sound obtaining apparatus 200, although being shown as an external device of the loudspeaker system 100 in FIG. 1, may be an apparatus included in a control apparatus (not shown) of the loudspeaker system 100.

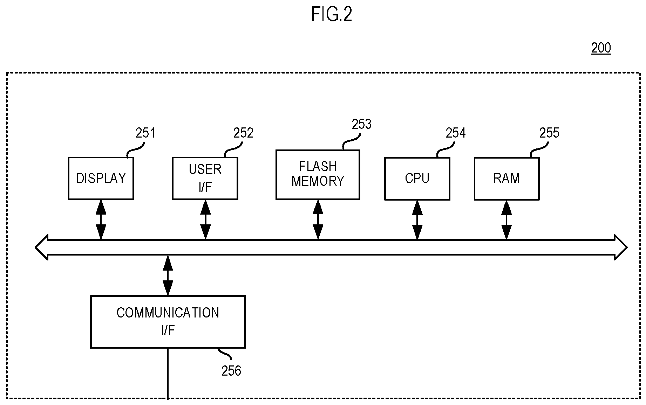

FIG. 2 is a block diagram showing a hardware configuration of the listening sound obtaining apparatus 200. The listening sound obtaining apparatus 200 is made of a general-purpose information processing apparatuses such as a personal computer or a smartphone, as an example. The general-purpose information processing apparatus may be an apparatus that an utterer uses or may be an apparatus that an operator who operates a conference, an installer who installs a conference system, or a similar party uses.

The listening sound obtaining apparatus 200 includes a display 251, a user I/F 252, a flash memory 253, a CPU 254, a RAM 255, and a communication I/F 256.

The display 251 includes an LCD, an OLED, or the like, for example, and displays various information. The user I/F 252 is, for example, a touch panel stacked on the LCD or the OLED being the display 251. Alternatively, the user I/F 252 may be a keyboard, a mouse, or the like. In a case in which the user I/F 252 is a touch panel, the user I/F 252 constitutes a GUI (Graphical User Interface) together with the display 251.

The communication I/F 256 is a communication means such as a wireless LAN, Bluetooth (registered trademark), or the like. The communication I/F 256 receives an audio signal, for example from the loudspeaker system 100.

The CPU 254 is an example of a processor and is a controller that controls an operation of the listening sound obtaining apparatus 200. The CPU 254 reads and executes a predetermined program such as an application program stored in the flash memory 253 being a storage medium to the RAM 255 and performs various types of operations. The CPU 254 according to the present embodiment achieves the function of a controller 201, a measurer 202, and an information provider 203 that are shown in FIG. 1. It is to be noted that the program may be stored in a server (not shown). The CPU 24 may download the program from the server through a network and may execute the program.

As shown in FIG. 1, the listening sound obtaining apparatus 200 includes a controller 201, a measurer 202, and an information provider 203. Herein, the measurer 202 is a means to measure the sound pressure at any position on a transmission channel of an utterance sound in the loudspeaker system 100. The controller 201 includes a processor, a non-volatile memory that stores a program executed by the processor, a volatile memory used as a work area by the processor, or the like. This controller 201 obtains the sound pressure at the listening position of the conference participant $M_j$ being a listener by arithmetic operation using the sound pressure measured by the measurer 202. In addition, the controller 201, based on the sound pressure at the listening position, determines a relationship to an appropriate value of the sound pressure of the utterance sound and provides visible information showing a determination result by the information provider 203.

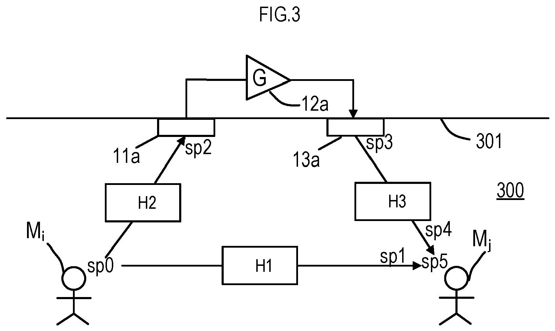

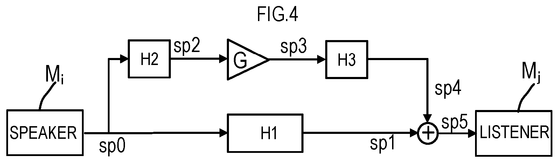

FIG. 3 is a view showing a transmission system of the utterance sound in the loudspeaker system 100. In addition, FIG. 4 is a block diagram that represents the same transmission system by a transfer function.

In this example, a microphone 11a as the sound collection means 11, an amplifier 12a as the amplification means 12, and a speaker 13a as the sound emission means 13 are arranged on a ceiling 301 of a conference room 300. A channel from an utterance position (a position of a head, for example) of the conference participant $M_i$ up to a listening position (a position of a head, for example) of the conference participant $M_j$ passing through the microphone 11a, the amplifier 12a, and the speaker 13a is the loudspeaker transmission channel 10. In addition, a channel from the utterance position of the conference participant $M_i$ up to the listening position of the conference participant $M_j$ without passing through the loudspeaker transmission channel 10 is the direct transmission channel 20.

In this example, when the sound pressure of the utterance sound at the utterance position is represented by sp0, the transfer function from the utterance position to a sound collector of the microphone 11a is represented by $H_2$, a total gain of the microphone 11a, the amplifier 12a, and the speaker 13a is represented by G, and the transfer function from a sound emitter of the speaker 13a to the listening position is represented by H3, a sound pressure sp4 of a sound that reaches the listening position via the loudspeaker transmission channel 10 is expressed by the following formula.

$$sp4=H_2 \cdot G \cdot H_3 \cdot sp0 \quad ... \quad (1)$$

On the other hand, when the transfer function of the direct transmission channel 20 is represented by $H_1$, a sound pressure sp1 of a sound that reaches the listening position via the direct transmission channel 10 is expressed by the following equation.

$$sp1=H_1 \cdot sp0 \quad ... \quad (2)$$

Accordingly, a sound pressure sp5 of the listening sound at the listening position is expressed by the following equation.

$$sp5=sp1+sp4$$

$$=(H_2 \cdot G \cdot H_3+H_1) \cdot sp0 \quad ... \quad (3)$$

Incidentally, in the transmission system shown in FIG. 3 and FIG. 4, when an input sound pressure of the microphone 11a is represented by sp2, this sound pressure sp2 is a sound pressure at a position on the transmission channel of the utterance sound and expressed by the following equation.

$$sp2=H_2 \cdot sp0 \quad ... \quad (4)$$

Herein, a sound pressure sp0 is able to be reversely calculated from the sound pressure sp2 by the following equation.

$$sp0=H_2^{-1} \cdot sp2 \quad ... \quad (5)$$

Then, the controller 201 of the listening sound obtaining apparatus 200 measures the sound pressure sp2 by the measurer 202, performs arithmetic operation of the following equation based on this measured sound pressure sp2, and calculates the sound pressure sp5 at the listening position.

$$sp5=(H_2 \cdot G \cdot H_3+H_1) \cdot sp0$$

$$=(H_2 \cdot G \cdot H_3+H_1) \cdot H_2^{-1} \cdot sp2 \quad ... \quad (6)$$

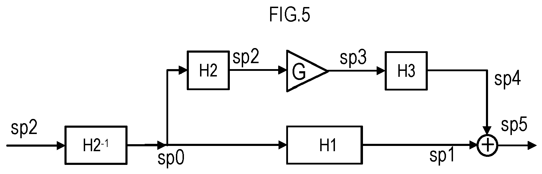

FIG. 5 represents arithmetic content of this equation (6) as a block diagram.

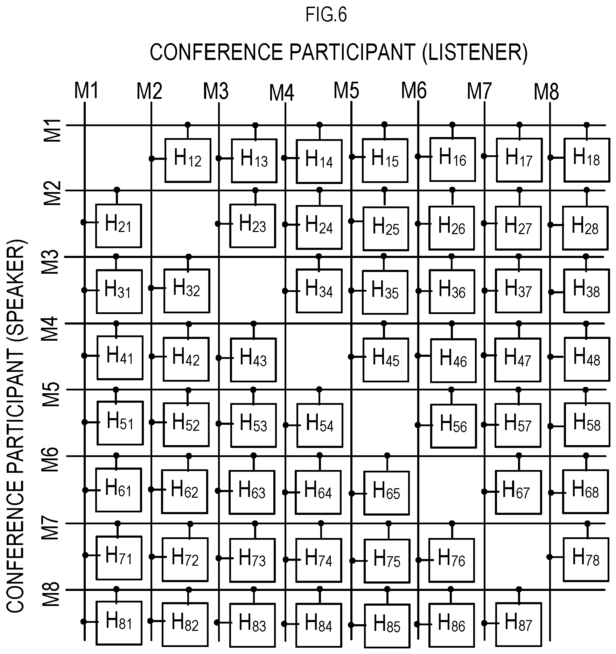

Next, the function of the listening sound obtaining apparatus 200 will be more generally described. FIG. 6 is a block diagram showing the transmission system of the utterance sound of the loudspeaker system 100 when the number N of conference participants is eight. In this loudspeaker system 100, normally, any one among the N conference participants $M_i$ (i=1-N) is an utterer and the remaining N-1 persons are listeners. FIG. 6 shows N horizontal lines (N=8 in this example) connected to the vertically arranged conference participants $M_i$ (i=1-N). These horizontal lines show channels in which a sound uttered by the conference participant $M_i$ (i=1-N) propagates. In addition, FIG. 6 shows N vertical lines connected to the horizontally arranged conference participant $M_j$ (j=1-N). These vertical lines show channels in which a sound listened to by the conference participant $M_j$ (j=1-N) propagates. In addition, FIG. 6 shows a transfer function $H_{ij}$ at each intersection of each horizontal line connected to the conference participant $M_i$ (i=1-N) and each vertical line connected to the conference participant $M_j$ (j=1-N and j≠i). This transfer function $H_{ij}$ is a transfer function of a transmission channel in which the loudspeaker transmission channel 10 and the direct transmission channel 20 interposed between the conference participants $M_i$ and $M_j$ (j≠i) are parallelly connected. The utterance sound of the conference participant $M_i$ being an utterer reaches the conference participant $M_j$ being a listener through the transfer function $H_{ij}$.

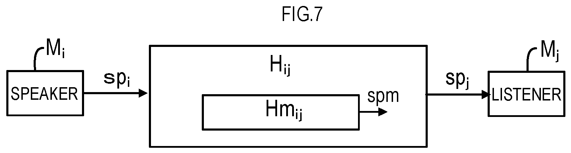

FIG. 7 shows the transfer function $H_{ij}$ of the transmission channel interposed between the conference participants $M_i$ and $M_j$ (j≠i). In the present embodiment, this transmission channel includes a transmission channel that transmits the utterance sound. Herein, a transfer function $Hm_{ij}$ is a transfer function representing a part of the transfer function $H_{ij}$ and spm represents a sound pressure at any position. According to this, the listening sound obtaining apparatus 200 is able to obtain the sound pressure (spm) at any position on the transmission channel of the utterance sound and calculate the sound pressure at the listening position of the listener based on the obtained sound pressure. Specifically, the listening sound obtaining apparatus 200, when being able to obtain the sound pressure spm, is able to calculate a sound pressure $sp_i$ by using an inverse function of the transfer function $Hm_{ij}$.

$$sp_i=Hm_{ij}^{-1} \cdot spm \quad ... \quad (7)$$

When $sp_i$ is able to be calculated, spj is able to be calculated as in the equation (3). $sp_j=H_{ij} \cdot sp_i$

$$=H_{ij} \cdot Hm_{ij}^{-1} \cdot spm \quad ... \quad (8)$$

Then, in the present embodiment, the controller 201, based on the sound pressure spm, executes the arithmetic operation shown in the above equation (8) and calculates the sound pressure $sp_j$ at the listening position (N-1 points) of the conference participant $M_j$ (j=1-N and j≠i) being a listener.

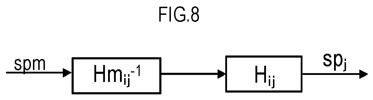

FIG. 8 represents the arithmetic operation of the equation (8) by a block diagram.

The correspondence relationship between this generalized embodiment and the above embodiments in FIG. 3 and FIG. 4 is as follows, for example.

<Example 1: In a case of spm=sp2>

$$spm = sp2$$

$$Hm_{ij} = H_2$$

$$sp_i = sp0$$

$$sp_j = sp5$$

$$H_{ij} = H_2 \cdot G \cdot H_3 + H_1$$

<Example 2: In a case of spm=sp4>

$$spm = sp4$$

$$Hm_{ij} = H_2 \cdot G \cdot H_3$$

$$sp_i = sp0$$

$$sp_j = sp5$$

$$H_{ij} = H_2 \cdot G \cdot H_3 + H_1$$

As described by use of the above Example 1 and Example 2, the case in which the sound pressure is obtained at the position of $sp_2$ is defined as $Hm_{ij} = H_2$ and the case in which the sound pressure is obtained at the position of $sp_4$ is defined as $Hm_{ij} = H_2 \cdot G \cdot H_3$. As described above, it is necessary to use an inverse function $Hm_{ij}^{-1}$ corresponding to the position at which the sound pressure is obtained. In the present embodiment, in order to obtain the sound pressure at the listening position, it is necessary to use the transfer function $H_{ij}$ of the transmission channel interposed between the conference participants $M_i$ and $M_j$ ($j \neq i$) and the transfer function $Hm_{ij}$ of the transmission channel that generates a monitor sound. In the present embodiment, at a time of installing of the loudspeaker system 100, the position of the head of the conference participant $M_i$ (i=1-N) is determined and the characteristics of each part of the loudspeaker transmission channel 10 are optimized, based on the position. According to this, the content of the transfer functions $H_{ij}$ and $Hm_{ij}$ is also determined. Then, in the present embodiment, at the time of installing of the loudspeaker system 100, the transfer functions $H_{ij}$ and $Hm_{ij}$ are generated by arithmetic operation, simulation, or the like and stored in a non-volatile memory of the controller 201. Then, at a time of operation of the loudspeaker system 100, the controller 201 obtains the sound pressure at the listening position by using the stored transfer functions $H_{ij}$ and $Hm_{ij}$.

In addition, in the present embodiment, in order to obtain the sound pressure at the listening position, it is necessary to use the transfer functions $H_{ij}$ and $Hm_{ij}$ associated with the conference participant $M_i$ being an utterer. Therefore, it is necessary to specify the conference participant $M_i$ being an utterer. Although various kinds of means are able to be considered with respect to detection of an utterer, for example, in a case in which the microphone 11a placed in the conference room 300 is a microphone that is able to control directivity so as to collect the utterance sound with a high gain, an utterer may be detected by use of this microphone. In addition, in a case in which utterer detection by the microphone 11a is difficult, the conference participant $M_i$ (i=1-N) in the conference room 300 is captured with a camera, for example, and a conference participant who is performing an utterance may be detected by executing recognition processing on a captured image.

The controller 201, when obtaining the sound pressure at the listening position of N-1 points, based on the obtained sound pressure, determines a relationship to an appropriate value of the sound pressure of the utterance sound and provides visible information showing a determination result by the information provider 203.

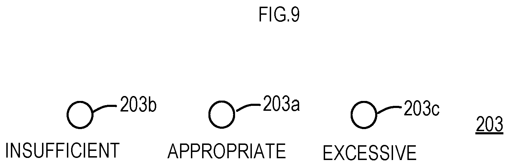

FIG. 9 is a view showing an example of the information provider 203. This information provider 203 has an appropriate lamp 203a attached with the characters of "appropriate," an insufficient lamp 203b attached with the characters of "insufficient," and an excessive lamp 203c attached with the characters of "excessive." In a preferable aspect, these appropriate lamp 203a, insufficient lamp 203b, and excessive lamp 203c are turned on in different luminous colors. The information provider 203, for example, is placed near the sound emitter. The position in which the information provider 203 is placed may be any position as long as an utterer can easily check. For example, the position in which the information provider 203 is placed, in a scene in which an utterer utters, may also be an easily visually recognizable position. Specifically, when the information provider is placed at the position of a speaker, the utterer can check that utterance is performed at an appropriate sound pressure by looking at the speaker actually emitting a sound. In addition, when the information provider is placed at the position near the hand of an utterer, the utterer can check that the utterance is performed at the appropriate sound pressure by checking the position near the hand. For example, the position in which the information provider 203 is placed may be a position at which an installer can be easily checked at the time of installing the loudspeaker system. Specifically, when the information provider is configured to be provided on a screen of a computer that the installer uses, the installer can easily check that the utterance is performed at the appropriate sound pressure by checking the own computer during installation work.

The controller 201, in a case in which all the sound pressures at listening positions of the N-1 points are within an appropriate range, turns on the appropriate lamp 203a. In addition, the controller 201, in a case in which the sound pressure in at least one point at the listening positions of the N-1 points is below the minimum of the appropriate range, turns on the insufficient lamp 203b. In this case, the utterer increases an utterance sound pressure. In addition, the controller 201, in a case in which the sound pressure in at least one point at the listening positions of the N-1 points is above the maximum of the appropriate range, turns on the excessive lamp 203c. In this case, the utterer reduces the utterance sound pressure.

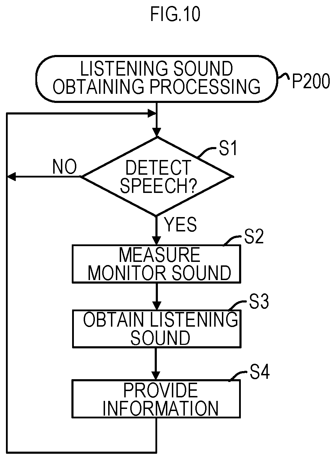

Next, an operation of the present embodiment will be described. In the present embodiment, a processor of the controller 201 repeatedly executes listening sound obtaining processing P200 shown in FIG. 10 according to the program in the non-volatile memory.

First, the processor of the controller 201 determines whether or not the utterance is detected (Step S1). This determination is, for example, executed based on a sound collecting state (specifically, whether or not the utterance sound is being collected or which utterance sound of the conference participant is being collected) or the like of the sound collection means 11. In a case in which the determination result of Step S1 is "NO," the processor of the controller 201 repeats the determination of the step S1.

In a case in which the determination result of Step S1 is "YES," the processor of the controller 201 measures the sound pressure spm of the monitor sound at the position on the transmission channel of the utterance sound of the conference participant being an utterer by the measurer 202 (Step S2).

Next, the processor of the controller 201 calculates a sound pressure $SP_j$ (j=1-N and j≠i) at the listening positions of the N-1 points, by using the transfer functions $H_{ij}$ and $Hm_{ij}^{-1}$ associated with the conference participant $M_i$ being an utterer and the sound pressure spm of the monitor sound obtained in Step S2 (Step S3).

Next, the processor of the controller 201, based on the sound pressure $SP_j$ (j=1-N and j≠i) at each listening position calculated in Step S3, determines a relationship to the appropriate value of the sound pressure of the utterance sound and provides the utterer by the information provider 203 with the visible information showing the determination result (Step S4). After this step S4 is completed, the processing returns to Step S1.

In the present embodiment, the processing of Steps S1-S4 is repeated as described above. Then, when an utterance occurs, the sound pressure at each listening position is calculated, the relationship to the appropriate value of the sound pressure of the utterance sound is determined, based on the calculation result, and the determination result is shown to the utterer. Accordingly, the utterer can change the utterance sound pressure so that the utterance sound pressure may reach each listener at the appropriate sound pressure.

<Other Embodiments>

As described above, although one embodiment of the present invention is described, other embodiments may be considered as the present invention. Examples are as follows.

(1) In the above embodiment, the listening sound obtaining apparatus 200 measures the sound pressure (sp2 in FIG. 3) of the input sound of the sound collection means 11 and calculates the sound pressure at the listening position by the arithmetic operation based on this measured sound pressure. However, the listening sound obtaining apparatus 200 may calculate the sound pressure at the listening position based on the sound pressure other than the sound pressure of the input sound of such a sound collection means 11. For example, the listening sound obtaining apparatus 200 may measure the sound pressure (sp3 in FIG. 3) of the output sound of the sound emission means 13 and may calculate the sound pressure at the listening position by the arithmetic operation based on this measured sound pressure. Alternatively, the listening sound obtaining apparatus 200 may measure the sound pressure (sp2 in FIG. 3) of the input sound of the sound collection means 11 and the sound pressure (sp3 in FIG. 3) of the output sound of the sound emission means 13 and may calculate the sound pressure at the listening position by the arithmetic operation based on this measured sound pressure. Alternatively, the listening sound obtaining apparatus 200 may measure the sound pressure (sp0 in FIG. 3) of the utterance sound at the utterance position and may calculate the sound pressure at the listening position by the arithmetic operation based on this measured sound pressure.

(2) In the above embodiment, the listening sound obtaining apparatus 200, although obtaining the sound pressure at the listening position by using the previously determined transfer functions $H_{ij}$ and $Hm_{ij}^{-1}$, may calculate head positions (in other words, the utterance position and the listening position) of the conference participant $M_i$ (i=1-N), for example, by an image captured with a camera, distance measurement by LiDAR (Light Detection and Ranging), or the like and may generate a transfer function of the transmission channel interposed between each conference participant, based on these head positions. In addition, the listening sound obtaining apparatus 200 may measure environmental information such as a position of a wall surface of the room or quality (reflectivity) of a material of the wall surface, by the image captured with a camera, the distance measurement by LiDAR, or the like and may generate a transfer function of the transmission channel interposed between each conference participant based on the environmental information. More specifically, the listening sound obtaining apparatus 200 calculates the position of the wall surface of the room, the quality (the reflectivity) of the material of the wall surface of the room, a distance between an utterer and the sound collection means 11, a distance between the sound emission means 13 and a listener, and a distance between the utterer and the listener. The listening sound obtaining apparatus 200 calculates the transfer function $H_1$ from the utterance position to the listening position based on the distance between the utterer and the listener, a positional relationship between the utterer and the wall surface, a positional relationship between the listener and the wall surface, and the reflectivity of the wall surface. The listening sound obtaining apparatus 200 calculates the transfer function $H_2$ from the utterance position to the sound collector of the microphone 11a based on the distance between the utterer and the sound collection means 11, the positional relationship between the utterer and the wall surface, a positional relationship between the sound collection means 11 and the wall surface, and the reflectivity of the wall surface. The listening sound obtaining apparatus 200 calculates the transfer function $H_2$ from the utterance position to the sound collection means 11 based on the distance between the utterer and the sound collection means 11, the positional relationship between the utterer and the wall surface, and the reflectivity of the wall surface.

(3) In the above embodiment, the listening sound obtaining apparatus 200, although calculating the sound pressure at the listening position by the arithmetic operation, may make a determination by selecting an appropriate sound pressure from database (matrix or the like) measured in advance. Each of the microphone and the speaker may include a plurality of microphones and speakers as long as the matrix is appropriately set.

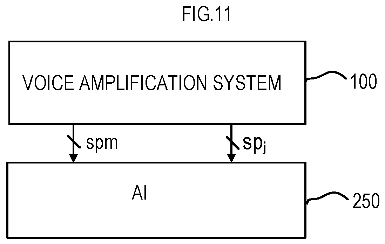

(4) As illustrated in FIG. 11, the listening sound obtaining apparatus 200 may achieve an AI (artificial intelligence) 250. In the aspect shown in FIG. 11, in the loudspeaker system 100, each conference participant Mi (i=1-N) is caused to perform utterance. The sound pressure spm of the monitor sound to be obtained from the loudspeaker system 100 at that time and the sound pressure $sp_j$ at the listening position are given to the AI 250 as teaching data, and the AI 250 is caused to learn the relationship between the sound pressure spm of the monitor sound and the sound pressure $sp_j$ at the listening position. Then, at the time of full operation of the loudspeaker system 100, the AI 250 calculates the sound pressure $sp_j$ at the listening position based on the sound pressure spm of the monitor sound to be obtained from the loudspeaker system 100.

(5) The information provider 203 may place an object corresponding to each of the conference participants Mi (i=1-N), for example, in front of each conference participant. In this aspect, in a case in which a certain conference participant Mi is an utterer, the information provider 203 corresponding to the conference participant Mi provides visible information showing the relationship to the appropriate value of the utterance sound pressure.

(6) In a case in which the sound emission means 13 includes a plurality of sound emission means, the listening sound obtaining apparatus 200 may place the information provider 203 in association with each sound emission means 13.

(7) In the above embodiment, the listening sound obtaining apparatus 200, although determining the relationship to the appropriate value of the utterance sound pressure, based on the sound pressure at the listening position, may determine the relationship, based on a sound pressure other than the sound pressure at the listening position.

(8) In the above embodiment, the listening sound obtaining apparatus 200, although dividing and displaying the relationship to the appropriate value of the utterance sound pressure into three ranks: insufficient, appropriate, and excessive, may divide and display the relationship into four or more ranks. Alternatively, the listening sound obtaining apparatus 200 may display for each listening position a bar graph (display as a continuous value) of the utterance sound pressure calculated from the sound pressure at the listening position.

(9) With respect to the loudspeaker transmission channel 10, a gain may be set in advance such that basic human utterance volume may be in a reasonably appropriate amplification degree. According to this, the utterance sound pressure to cause an amplification state to be appropriate is able to be set within a reasonable range for an utterer.

(10) The listening sound obtaining apparatus 200, in the transmission system shown in FIG. 3, in a case in which the sound pressure sp1 of the sound that reaches the listening position via the direct transmission channel 10 satisfies a certain condition (a first condition), may regards the sound pressure sp4 of the utterance sound that reaches a listener through the loudspeaker transmission channel 10 as a sound pressure sp5 at a position of the listener. For example, the listening sound obtaining apparatus 200, in a case in which the sound pressure sp1 is sufficiently small, determines that the first condition is satisfied and also set the sound pressure sp4 = the sound pressure sp5. The listening sound obtaining apparatus 200, in a case in which the distance between the conference participant Mi and the conference participant Mj exceeds a predetermined threshold value, for example, may determine that the first condition is satisfied, may disregard the sound pressure sp1, and also set the sound pressure sp4 = the sound pressure sp5. In addition, the listening sound obtaining apparatus 200, in a case in which the gain of the loudspeaker transmission channel 10 is high and a value of the sound pressure sp4 is higher than the sound pressure sp1 by a predetermined value or more, may determine that the first condition is satisfied and also set the sound pressure sp4=sp5. Alternatively, the listening sound obtaining apparatus 200, in a case in which an acoustic obstacle such as a wall, a partition, or the like is present between the position of an utterer and the position of a listener, may determine that the first condition is satisfied and also set the sound pressure sp4=sp5. Alternatively, the listening sound obtaining apparatus 200, in a case of receiving a setting without using the sound pressure sp1 of an utterer from a user, may determine that the first condition is satisfied and also set the sound pressure sp4=sp5.

The listening sound obtaining apparatus 200, in a case in which the sound pressure sp1 of the sound that reaches the listening position via the direct transmission channel 10 does not satisfy the first condition (in a case in which the sound pressure sp1 is sufficiently large, in a case in which the distance between the conference participant Mi and the conference participant Mj is below a predetermined threshold value, in a case in which the value of the sound pressure sp4 in comparison with the sound pressure sp1 is less than a predetermined value, in a case in which the acoustic obstacle such as a wall, a partition, or the like is absent between the position of an utterer and the position of a listener, in a case in which a user does a setting that uses the sound pressure sp1), calculates the sound pressure sp5 at the position of the listener as sp1+sp4 based on the obtained sound pressure sp4 and the sound pressure sp1 of the utterance sound.

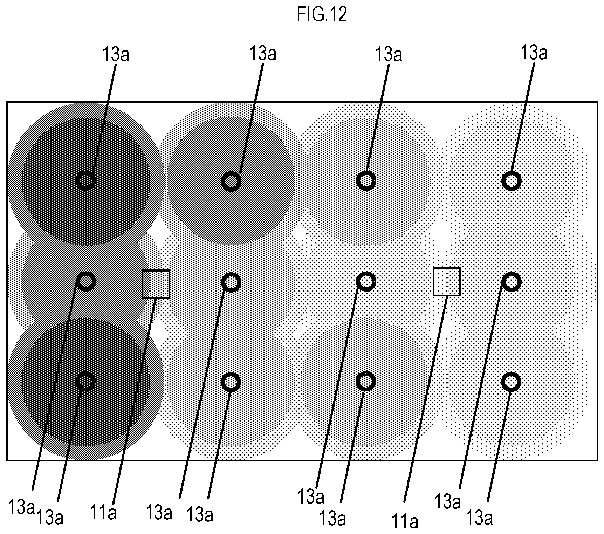

(11) FIG. 12 is a diagram showing a modification of visible information. In this example, the listening sound obtaining apparatus 200 provides an utterer with a sound pressure at a listening position as sound pressure distribution, in a display 251. The example of FIG. 12 shows the microphone 11a and the speaker 13a on a schematic diagram in a plan view of a conference room. In addition, in the example of FIG. 12, the listening sound obtaining apparatus 200 displays the sound pressure in respect of listening by color density. For example, a dark-colored part has a high sound pressure and a light-colored part has a low sound pressure. The listening sound obtaining apparatus 200 may display the sound pressure in respect of listening by difference in color. The listening sound obtaining apparatus 200, for example, may display the color of a position with high sound pressure in red and the color of a position with the low sound pressure in blue.

Although the example of FIG. 12 shows two microphones 11a, the listening sound obtaining apparatus 200 may display a screen that is different between a first microphone 11a and a second microphone 11a and may display the sound pressure distribution for each microphone. In addition, the listening sound obtaining apparatus 200 may change the color of the sound pressure for each microphone. For example, the listening sound obtaining apparatus 200 may display the sound pressure distribution by density of red in the first microphone 11a and may display the sound pressure distribution by density of blue in the second microphone 11a. It is to be noted that, in a case in which the number of microphones is further large (in a case of four, for example), the listening sound obtaining apparatus 200 may assign each of red, blue, green, and light blue, for example, and may represent information including an appropriate value, sound pressure, or the like by each contrasting density. According to this, whether each volume of plurality of talkers is able to be appropriately amplified in a venue can be intuitively grasped. In addition, the listening sound obtaining apparatus 200 may receive a selection of a specific microphone from a user and may display only the selected specific microphone. The listening sound obtaining apparatus 200, for example, in a case in which four microphones are present, for example, in a case of receiving a selection of the first microphone, displays information showing whether a sound collected by the first microphone is appropriately amplified. Alternatively, the number of selected microphones is not limited to one but may be two, three, or more than the above. In addition, the listening sound obtaining apparatus 200 may automatically select a microphone that receives an input of the largest sound pressure.

According to this, the utterer can intuitively grasp the utterance sound pressure that reaches the inside of the conference room at a glance and can easily change the utterance sound pressure so as to send a voice to a listener at the appropriate sound pressure.

(12) The visible information may be a display such as an LED or the like provided for each speaker. The listening sound obtaining apparatus 200, for example, may light the LED in blue when the sound pressure is insufficient. In addition, the listening sound obtaining apparatus 200 may light the LED in red when the sound pressure is excessive. The listening sound obtaining apparatus 200 may light the LED in green when the sound pressure is adequate. In addition, the listening sound obtaining apparatus 200 may change the brightness of the LED according to the sound pressure. The listening sound obtaining apparatus 200, for example, may darken the LED when the sound pressure is insufficient and may brighten the LED when the sound pressure is excessive.

(13) The listening sound obtaining apparatus 200 may guide a determination result with sensory information by a voice. For example, the listening sound obtaining apparatus 200 may guide with the voice of "please turn up the voice" when the sound pressure is insufficient and may guide with the voice of "please turn down the voice" when the sound pressure is excessive.

(14) The listening sound obtaining apparatus 200 may guide the determination result with the sensory information by vibration. In this case, the listening sound obtaining apparatus 200 includes a vibration device that the utterer carries. The listening sound obtaining apparatus 200 vibrates the vibration device when the sound pressure is insufficient and when the sound pressure is excessive.

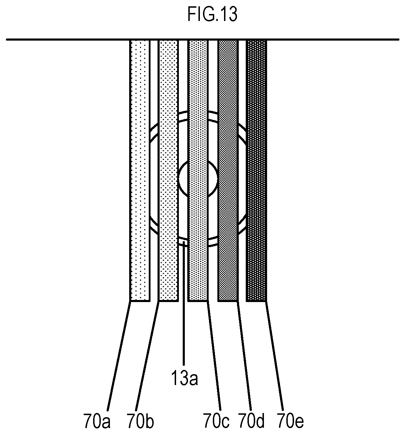

(15) FIG. 13 is a diagram showing a modification of the visible information. In this example, the listening sound obtaining apparatus 200 provides an utterer with the visible information showing the relationship to the sound pressure of an utterance sound by placing at a plurality of points an index that changes corresponding to (proportional to, for example) the magnitude of the sound pressure. More specifically, in this example, a plurality of ribbons 70a-70e are placed in front of the speaker 13a as the index. The plurality of ribbons 70a-70e hang down from, for example, the ceiling of the conference room. The plurality of ribbons 70a-70e each have a different color and physical property. The physical property includes an elastic modulus (hardness) or weight, for example. The ribbon 70a has the lightest color and is the softest (or light). The ribbon 70e has the darkest color and is the hardest (or heavy). Accordingly, the ribbon 70a is the easiest to move. The ribbon 70a moves even when the sound pressure of the speaker 13a is low. The ribbon 70e is the hardest to move. The ribbon 70e moves in a case in which the sound pressure of the speaker 13a is high. In short, the ribbons 70a-70e sequentially move as the sound pressure of the speaker 13a is increased. According to this, the utterer can visually recognize the sound pressure by looking at the movement of the ribbons 70a-70e. For example, the utterer can determine that the sound pressure is excessive when the ribbon 70e moves. In addition, the utterer can determine that the sound pressure is insufficient when only the ribbon 70a moves.

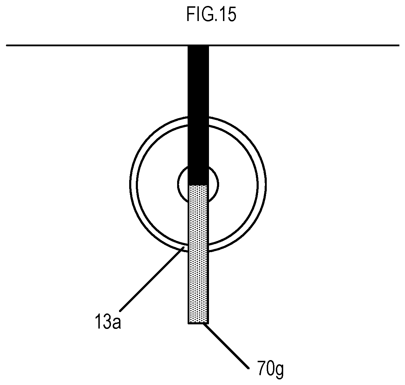

FIG. 15 is a diagram showing a further modification of the visible information. In the example of FIG. 15, a ribbon 70g of which only the part moves with respect to the sound pressure (70 dB or more, for example) equal to or larger than a predetermined value is placed in front of the speaker 13a. A part on a lower side of the ribbon 70g is a member having a low elastic modulus or light weight. A part on an upper side from a predetermined position of the ribbon 70g is a member having a high elastic modulus or heavy weight. In a case in which the sound pressure reaches an appropriate value, only the part on the lower side of the ribbon 70g moves. According to this, the utterer can visually recognize that the sound pressure has reached the appropriate value by looking at the movement of the ribbon 70g.

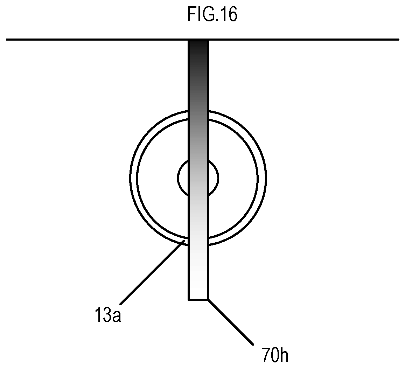

FIG. 16 is a diagram showing a further modification of the visible information. A ribbon 70h shown in the example of FIG. 16 has a high elastic modulus (or has a heavy weight) as being at a position near the ceiling, and a low elastic modulus (or has a light weight) as being at a position away from the ceiling. In short, the ribbon 70h moves the lower side when the sound pressure of the speaker 13a is low, and also moves the upper side as the sound pressure is high. In this case as well, the utterer can also visually recognize the sound pressure by looking at the movement of the ribbon 70h. For example, the utterer can determine that the sound pressure is excessive when the entire ribbon 70h moves. In addition, the utterer can determine that the sound pressure is insufficient when only the part on the lower side of the ribbon 70h moves.

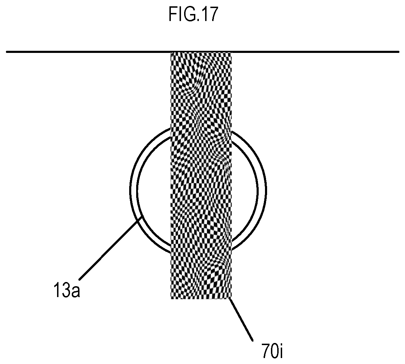

FIG. 17 is a diagram showing a further modification of the visible information. A ribbon 70i shown in the example of FIG. 17 is thin film-like and is a member having a low elastic modulus and light weight as a whole. Accordingly, the entirety of the ribbon 70i vibrates even with a low sound pressure. In addition, the ribbon 70i has a main surface on which a patterned design is formed. When the ribbon 70i vibrates, the patterned design swings. The utterer can visually recognize the magnitude of the sound pressure by looking at the swing of the patterned design of the ribbon 70i. For example, the utterer can determine that the sound pressure is excessive in a case in which the design of the ribbon 70i intensely swings. In addition, the utterer can determine that the sound pressure is insufficient in a case in which the swing of the design of the ribbon 70i is small.

(16) The listening sound obtaining apparatus 200 may calculate the sound pressure at any position on the transmission channel, from the level of an audio signal to be supplied to the speaker. Alternatively, the listening sound obtaining apparatus 200 may calculate the sound pressure at any position on the transmission channel, from a driving voltage of the speaker.

(17) The visible information may show a ratio of a part that has the appropriate sound pressure to the entire room. The listening sound obtaining apparatus 200 may indicate aptitude by using a display such as an LED, an LCD, an OLED, or the like in a case in which the ratio of the part that has the appropriate sound pressure to the entire room, for example, is a predetermined value (70%, for example).

(18) "Aptitude" is not limited to a case in which the sound pressure is aptitude. "Aptitude" may be whether or not frequency characteristics are appropriate. "Aptitude" may be whether or not the sound pressure of an utterance voice to the sound pressure of noise is aptitude. In addition, "aptitude" may be a determination result based on an index (STI: Speech Transmission Index) by which articulation of the voice is evaluated. The voice is hardly heard when the original waveform deforms due to reverberation, noise, or the like, in process of transmission. The STI is an index by which the articulation of the voice is evaluated, depending on how accurately the voice is transmitted without such waveform deformation. In the present embodiment, by the simulation, the measurement, or the like, the transfer function H1 from the utterer to the listener, the transfer function H2 from the utterer to the microphone 11a, the total gain G of the microphone 11a, the amplifier 12a, and the speaker 13a, and the transfer function $H_3$ from the speaker 13a to the listening position are calculated. As described above, a transfer function including an amplification system is expressed by H1+(H2+H3) ×G. The transfer function is able to be represented by an impulse response IR of a time domain. The listening sound obtaining apparatus 200 measures noise N such as air-conditioning noise, in advance or in a time zone without an utterance. The sound pressure sp5 at the listening position is calculated by the above equation (3) or equation (6). Accordingly, the SN ratio of the utterance voice and the noise is calculated by sp5/N. The STI is calculated based on IEC 60268-16, from the impulse response IR and the SN ratio. The listening sound obtaining apparatus 200 may perform display corresponding to the calculated STI in place of the sound pressure. The STI is determined based on such reference that 0.75 or above is Excellent, 0.6-0.75 is Good, or the like, for example. Accordingly, the listening sound obtaining apparatus 200 may display the numerical value of the STI or may perform the display of Excellent, Good, or the like corresponding to this reference.

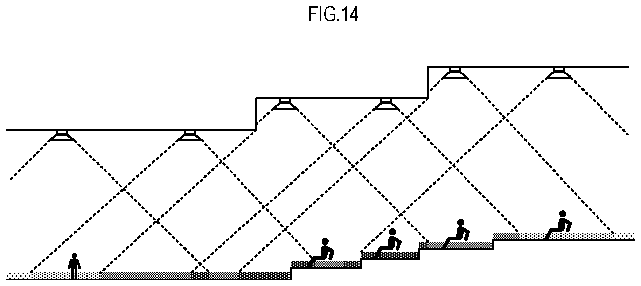

(19) FIG. 14 is a side surface schematic diagram of the conference room. The listening sound obtaining apparatus 200 in this example emits light corresponding to a directivity angle of a sound to be emitted by the sound emission means and provides the utterer with a sound emission area of the sound as the visible information, by the light.

In the example of FIG. 14, a light emitter that emits the light corresponding to the directivity angle of the sound is provided in each of the speakers installed on the ceiling. A place in which the sound of a plurality of speakers reaches brightens, since illuminated by the light of a plurality of light emitters. In addition, in a case in which the ceiling has a level difference or in a case in which a partition is in a space, the light of the light emitter is blocked.

The light and the sound have a difference in diffraction conditions or attenuation rates, so that a range in which the light and the sound easily reach and a range in which the light and the sound hardly reach cannot be said to be completely the same. However, as a general tendency, a position at which the light easily reaches is able to be interpreted as a position in which the sound also easily reaches. Accordingly, the utterer can visually and intuitively understand that a loud sound reaches a bright place and a sound hardly reaches a dark place.

Reference Signs List

100 ... loudspeaker system, 10 ... loudspeaker transmission channel, 11 ... sound collection means, 12 ... amplification means, 13 ... sound emission means, 11a ... microphone, 12a ... amplifier, 13a ... speaker, 20 ... direct transmission channel, 200 ... listening sound obtaining apparatus, 201 ... controller, 202 ... measurer, 203 ... information provider, $M_i$, $M_j$ ... conference participant

**Claims**

1. A listening sound obtaining method in a loudspeaker system that sends an utterance sound of an utterer to a listener through a loudspeaker transmission channel including a sound collection means, an amplification means, and a sound emission means, the listening sound obtaining method comprising:

    obtaining a sound pressure at any position on a transmission channel of the utterance sound; and
    calculating a sound pressure at a listening position of the listener based on obtained sound pressure.

2. The listening sound obtaining method according to claim 1, comprising, in a case in which the utterance sound that reaches the listener through a direct transmission channel that does not include the loudspeaker transmission channel satisfies a first condition, calculating the sound pressure at the listening position of the listener while regarding the sound pressure of the utterance sound that reaches the listener through the loudspeaker transmission channel as the sound pressure at a position of the listener.

3. The listening sound obtaining method according to claim 1 or claim 2, comprising:

    measuring the sound pressure at any position on the transmission channel of the utterance sound; and
    calculating the sound pressure at the listening position of the listener by arithmetic operation based on this measured sound pressure.

4. The listening sound obtaining method according to claim 1 or claim 2, comprising:

    measuring a sound pressure of an input sound of the sound collection means; and
    calculating the sound pressure at the listening position by arithmetic operation based on this measured sound pressure.

5. The listening sound obtaining method according to claim 1 or claim 2, comprising:

    measuring a sound pressure of an output sound of the sound emission means; and
calculating the sound pressure at the listening position by arithmetic operation based on this measured sound pressure.

6. The listening sound obtaining method according to claim 1 or claim 2, comprising:

measuring a sound pressure of an input sound of the sound collection means and a sound pressure of an output sound of the sound emission means; and
calculating the sound pressure at the listening position by arithmetic operation based on this measured sound pressure.

7. The listening sound obtaining method according to claim 1 or claim 2, comprising:

measuring the sound pressure of the utterance sound; and
calculating the sound pressure at the listening position by arithmetic operation based on this measured sound pressure.

8. The listening sound obtaining method according to claim 1 or claim 2, comprising:

determining a relationship to an appropriate value of the sound pressure of the utterance sound; and
providing the utterer with visible information showing a determination result.

9. The listening sound obtaining method according to claim 1 or claim 2, comprising:

determining a relationship to an appropriate value of the sound pressure of the utterance sound; and
providing the utterer with sensory information showing a determination result.

10. The listening sound obtaining method according to claim 8, comprising determining the relationship to the appropriate value of the sound pressure of the utterance sound, based on the sound pressure at the listening position.

11. The listening sound obtaining method according to claim 8, comprising placing an apparatus that provides the visible information in association with the sound emission means.

12. The listening sound obtaining method according to claim 1 or claim 2, comprising providing the utterer with the sound pressure at the listening position as sound pressure distribution.

13. The listening sound obtaining method according to claim 1 or claim 2, comprising:

emitting light corresponding to a directivity angle of a sound to be emitted by the sound emission means; and
providing the utterer with a sound emission area of the sound as visible information, by the light.

14. The listening sound obtaining method according to claim 1 or claim 2, comprising, by placing an index that changes corresponding to a magnitude of the sound pressure in a plurality of points, providing the utterer with visible information showing a relationship to an appropriate value of the sound pressure of the utterance sound.

15. The listening sound obtaining method according to claim 2, comprising:

detecting a position of a head of the utterer and the listener;
obtaining, based on the position of the head, a transfer function from the utterer leading up to the position of the listener through the direct transmission channel, a transfer function from the utterer leading up to the sound collection means, and a transfer function from the sound emission means leading up to the position of the listener; and
calculating the sound pressure at the listening position of the listener based on these obtained transfer functions.

16. A listening sound obtaining apparatus that obtains, in a loudspeaker system that sends an utterance sound of an utterer to a listener through a loudspeaker transmission channel including a sound collection means, an amplification means, and a sound emission means, a sound pressure at a listening position of the listener the listening sound obtaining apparatus comprising a controller that obtains the sound pressure at any position on a transmission channel of the utterance sound and calculates a sound pressure at a listening position of the listener based on obtained sound pressure.

FIG.1

FIG.2

200

| 251 | 252 | 253 | 254 | 255 |
|---|---|---|---|---|
| DISPLAY | USER I/F | FLASH MEMORY | CPU | RAM |

COMMUNICATION I/F

256

FIG.3

FIG.4

FIG.5

FIG.6

CONFERENCE PARTICIPANT (LISTENER)

CONFERENCE PARTICIPANT (SPEAKER)

FIG.7

FIG.8

$$\text{spm} \longrightarrow \boxed{\text{Hm}_{ij}^{-1}} \longrightarrow \boxed{\text{H}_{ij}} \xrightarrow{\text{sp}_j}$$

FIG.9

INSUFFICIENT     APPROPRIATE     EXCESSIVE

FIG.10

FIG.11

VOICE AMPLIFICATION SYSTEM — 100

spm $\quad$ sp$_j$

AI — 250

FIG.12

FIG.13

13a

70a 70b    70c 70d 70e

FIG.14

FIG.15

13a

70g

FIG.16

13a

70h

FIG.17

13a

70i

## INTERNATIONAL SEARCH REPORT

| International application No. |
|---|
| **PCT/JP2024/030652** |

### A. CLASSIFICATION OF SUBJECT MATTER

***H04R 27/00***(2006.01)i; ***G10K 15/00***(2006.01)i; ***H04R 1/02***(2006.01)i; ***H04R 3/00***(2006.01)i
FI: H04R27/00 Z; G10K15/00 L; H04R3/00 310; H04R3/00 320; H04R27/00 J; H04R1/02 103F

According to International Patent Classification (IPC) or to both national classification and IPC

### B. FIELDS SEARCHED

Minimum documentation searched (classification system followed by classification symbols)

H04R27/00; G10K15/00; H04R1/02; H04R3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-32463 A (KAJIMA CORPORATION) 29 January 2004 (2004-01-29) paragraphs [0014]-[0062], fig. 1, 3, 5, 6, 11 | 1-7, 12, 16 |
| Y | | 8, 9, 11, 13-15 |
| A | | 10 |
| Y | JP 2013-80994 A (BROTHER KOGYO KABUSHIKI KAISHA) 02 May 2013 (2013-05-02) paragraphs [0018]-[0053], fig. 2, 8 | 8, 9, 11, 14 |
| Y | JP 2008-236225 A (YAMAHA CORPORATION) 02 October 2008 (2008-10-02) paragraphs [0009], [0028], fig. 1, 8 | 13 |
| Y | JP 2018-137532 A (YAMAHA CORPORATION) 30 August 2018 (2018-08-30) paragraphs [0010]-[0017], fig. 2 | 15 |
| A | JP 2006-211178 A (YAMAHA CORPORATION) 10 August 2006 (2006-08-10) entire text, all drawings | 1-16 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **07 November 2024** | **19 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/030652**

| Patent document cited in search report | | | Publication date (day/month/year) | Patent family member(s) | Publication date (day/month/year) |
|---|---|---|---|---|---|
| JP | 2004-32463 | A | 29 January 2004 | (Family: none) | |
| JP | 2013-80994 | A | 02 May 2013 | US 2013/0085749 A1 paragraphs [0020]-[0054], fig. 2, 8 | |
| JP | 2008-236225 | A | 02 October 2008 | (Family: none) | |
| JP | 2018-137532 | A | 30 August 2018 | (Family: none) | |
| JP | 2006-211178 | A | 10 August 2006 | US 2006/0165242 A1 entire text, all drawings | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001245365 A